# EUROPEAN PATENT APPLICATION

(11) **EP 2 481 914 A1**
(43) Date of publication of application: **01.08.2012**
(21) Application number: 11152678.6
(22) Date of filing: 31.01.2011
(51) Int. Cl.: F03D 1/06

(54) **A wind turbine blade and a method of manufacturing thereof**

(71) Applicant: Vestas Wind Systems A/S, 8200 Aarhus N (DK)
(72) Inventor: Hancock, Mark, Southampton, Hampshire SO15 5HN (GB)

(57) **Abstract**

The invention provides a wind turbine blade comprising at least one spar section and at least two airfoil sections. Each spar section comprises two caps and two webs which have been pre-manufactured and positioned to form a tubular shape, and each airfoil section forms, respectively, a leading edge section and a trailing edge section of a corresponding blade section, the blade section being placed adjacently to one of the at least one spar sections. Each airfoil section comprises a shell positioned both in a pressure side and in a suction side of the blade. An aerodynamic profile of the blade is defined by said caps and the at least two airfoil sections..

## Description

### Technical field

The present invention relates to a wind turbine blade comprising a spar and at least one airfoil section. Furthermore, the invention relates to a method of manufacturing a wind turbine blade comprising a spar and at least one airfoil section.

### Background of the invention

Modern wind turbines comprise a plurality of wind turbine rotor blades, typically three blades, each blade today having a weight of up to 15 tons and a length of up to 55 meters.

Traditionally, a blade comprises two shell parts, one defining a windward side shell part and the other one defining a leeward side shell part. To reinforce such a blade a box-shaped, longitudinal and tubular element, i.e. a spar, can act as a reinforcing beam. The spar is located in the cavity between the two wind turbine shell parts and extends substantially throughout the shell cavity in order to increase the strength and stiffness of the wind turbine blade.

As the size of wind turbines and thus wind turbine blades are still growing, the production facilities and the transport means must be upgraded to handle blades of the required size. This also increases the demand on logistics and increases the associated costs.

### Summary of the invention

It is an object of embodiments of the present invention to provide an improved wind turbine blade and an improved method of manufacturing a wind turbine blade.

In a first aspect, the invention provides a wind turbine blade comprising at least one spar section and at least two airfoil sections, wherein
- each spar section comprises two caps and two webs which have been pre-manufactured and positioned to form a tubular element;
- each airfoil section forming, respectively, a leading edge section and a trailing edge section of a corresponding blade section, the blade section being placed adjacently to one of the at least one spar sections;
- each airfoil section comprising a shell positioned both in a pressure side and in a suction side of the blade; and wherein
an aerodynamic profile of the blade being defined by said caps and the at least two airfoil sections.

The at least four pre-manufactured spar parts, i.e. the caps and the webs, are positioned and connected to form a tubular element which may constitute part of the longitudinal strength of the wind turbine blade, thus being part of the reinforcement of the blade. The caps and webs may be manufactured individually.

It should be understood, that by tubular element is in this connection meant a hollow element with an elongated shape. The shape may be non-uniform. The outer geometry may be of a substantially rectangular shape, a partly circular shape, an oval shape or any other shape. The inner geometry may be different from the outer shape, thus defining a tubular element in the form of an elongated ring of an arbitrary shape.

In a cross section, the spar may be substantially rectangular, box-shaped, e.g. with rounded corners. The area of the cross section may decrease from the root end to the tip end along the length of the spar to have a spar which fits a wind turbine blade having a decreased size at the tip end compared to the root end. However, the width of the spar may increase locally to increase strength and stiffness of the spar locally. In a preferred embodiment, the spar may thus be approximately conical, i.e. it may have a base which is substantially circular and transforms into an approximately rectangular shape with rounded corners and with sides which taper towards each other.

As an example, the spar may have a length of approximately 45 metres, a maximum width of approximately 1.0 metres, and a maximum height of approximately 0.8 metres. Compared hereto the minimal width of the spar may be approximately 100 millimetres. It should be understood that this is only one example of a spar. Other spars being both smaller and larger may also be used depending of the wind turbine blade to be manufactured.

The wind turbine blade comprises at least one spar section and at least two airfoil sections. Both the spar section and the at least two airfoil sections comprise an outer surface which forms part of an aerodynamically active surface, i.e. the aerodynamic profile of the wind turbine blade. Thus, the at least one spar section is not completely encapsulated within very large airfoil sections. Hence, the spar section(s) is(are) easier transported from a manufacturing site to an assembly site for being assembled. The assembly site can be situated close to the place where the turbine blade it to be used.

It should be understood, that the term 'spar' covers both a spar of a length corresponding substantially to the length of the blade and a spar being assembled form at least two spar sections, such as a root end section and a tip end section.

The shell may comprise two shell parts, a first shell part being positioned in the pressure side and a second shell part being in the suction side of the blade. In one embodiment, the airfoil section forming the leading edge section may comprise a shell part being positioned both in the pressure side and in the suction side of the blade, whereas the airfoil section forming the trailing edge section may comprise a first shell part being positioned in the pressure side and a second shell part being in the suction side of the blade to facilitate assembling of the blade.

The webs may have a larger thickness than the caps to increase a stiffness of the spar, where the thickness is the smallest dimension of the caps and webs. This may especially be an advantage in relation to larger blades where it can be difficult to ensure stability of the blade.

To facilitate manufacturing of the webs, each of the webs may comprise a plurality of web elements, e.g. of a length of 10 metres each. However, the web elements may also be of different length. The webs may be assembled of webs elements before assembling the spar/the spar sections by connecting the caps and webs. Alternatively, the web elements may be connected to each other while simultaneously connecting the caps and webs and thus forming a spar/spar section.

In a second aspect, the invention provides a method of manufacturing a wind turbine blade comprising a spar and at least one airfoil section, where both the spar and the airfoil section comprise an outer surface which forms part of an aerodynamically active surface of the blade. The method comprises the steps of:
- providing a support structure;
- placing the spar at the support structure;
- providing a clamp adapted to be fixed to the outer surface of both the spar and the airfoil section;
- arranging the airfoil section relative to the spar;
- fixing the clamp to the outer surface of the spar and the airfoil section; and
- assembling the at least one airfoil section and the spar by a process including adhesion.

The wind turbine blade manufactured by the present method comprises a spar and at least one airfoil section. Both the spar and the at least one airfoil section comprise an outer surface which forms part of an aerodynamically active surface of the wind turbine blade. Thus, the spar is not completely encapsulated within very large turbine blade shell parts. Hence, the spar is easier transported from a manufacturing site to an assembly site for being assembled according to the method, compared to large blade shells or complete blades, and the airfoil sections are smaller than normal blade shells. The assembly site can be situated close to the place where the turbine blade it to be used.

It should be understood, that the term 'spar' covers both a spar of a length corresponding substantially to the length of the blade and a spar being assembled form at least two spar sections, such as a root end section and a tip end section.

By manufacturing the blade of different parts, these parts may be transported unassembled, thereby facilitating transport with the possibility of reducing costs.

The use of a support structure and clamps enables a precise positioning of the spar and the at least one airfoil section relative to each other, thereby ensuring the designed performance of the final blade.

Furthermore, if one part should be damaged during transport, a substitute part may be used instead of having to replace a full wind turbine blade.

The spar may have been manufactured in one piece, or may have been assembled from at least two spar sections, e.g. a root end section and a tip end section. Furthermore, the spar may in a cross section be divided into more parts, such as four parts. The four parts may be two caps and two webs as described in connection with the first aspect of the invention.

The support structure, at which the spar can be placed, may be a worktable, a plurality of trestles, or a similar supporting structure which can support the spar during manufacturing of the wind turbine blade.

To be able to assemble the spar and the at least one airfoil section, the airfoil section is arranged relative to the spar, e.g. at one of the sides of the spar either relative to an upper portion of the spar or relative to a lower portion of the spar.

A clamp is fixed to the outer surface of the spar and to the outer surface of the airfoil section. The clamp may be fixed to both the spar and the airfoil section after arranging them relative to each other, or may be fixed to one of them before arranging them relative to each other.

The clamp may comprise an elongated body element with an elongated clamp surface in which at least one elongated clamp element is formed, each clamp element facilitating fixing to the outer surface of one of the airfoil section and spar.

The elongated clamp surface may have a shape facilitating fixing of the clamp to the outer surface of the airfoil section and the outer surface of the spar. The elongated clamp element may constitute a major part of the clamp surface to ensure a large fixing area.

An elongated shape of the clamp element may further ensure a large fixing area, as both the spar and the airfoil section in most embodiments have an elongated shape.

When having fixed the clamp to the outer surface of both the spar and the airfoil section, the two parts can be assembled by use of an adhesive. The method may thus comprise a step of applying an adhesive to at least one of the spar and the airfoil section. The adhesive may be added to at least one of the two parts before arranging them relative to each other. The assembly process may further include use of other means, such as screws, bolt and nut assemblies, snap locks, etc. These means may be combined with the use of an adhesive and may be combined with each other.

To finalise assembling of the spar and the airfoil section, the method may further comprise a step of curing said adhesive. The adhesive may be cured by the use of heat.

In one embodiment, the clamp may comprise a heating structure facilitating curing of an adhesive provided between the spar and the airfoil section. As an example, the heating structure may comprise electrically heated wires.

As the spar may be relatively long and compared hereto relatively thin, a spar may be slightly twisted or bended when arranged on the support structure. To ensure that the spar is correctly positioned before arranging the at least one airfoil section relative to the spar, the method may further comprise a step of aligning the spar relative to the support structure.

As the spar may be relatively long, it may be an advantage to be able to use a support structure which does not have a length corresponding to the full length of the spar. Consequently, the support structure may in one embodiment comprise a plurality of supporting posts. These supporting posts may be positioned adjacent to each other with a sufficient mutual distance to carry the spar.

The method may further comprise a step of aligning the supporting posts. This step may advantageously be carried out before placing the spar on the supporting posts.

In one embodiment, the supporting posts may be height adjustable. This may facilitate positioning of spars of different size, as the cross sectional area may be different for spars of different length. Especially, as the angle of tapering of the spar may not necessarily be the same for spars of different size.

The clamp may be fixed to the outer surface of the spar and the airfoil section by different means. The clamp may be fixed e.g. by magnetic forces, by the use of suction pressure, by bonding, by screws, rivets, or by other means. As an example, the step of fixing the clamp to the outer surface of the spar and the airfoil section may comprise a step of providing a pressure gradient between an elongated region in the clamp and an ambient pressure outside the elongated region to provide a clamping force. Consequently, the clamp may be connected to a suction device which may create a negative pressure gradient to fix the clamp.

Depending on the size of the blade to be manufactured and the size of the airfoil sections, the size of the clamp may vary. A typical clamp may have a length in the range of 3-10 meters.

To facilitate fixing of the clamp and to facilitate handling and thus assembling of the spar and the airfoil section, the pressure gradient may be provided in a region extending along a major part of the length of the airfoil section. In one embodiment the region extends along substantially the full length of the airfoil section.

As the wind turbine blade may be manufactured from a plurality of airfoil sections, it may be an advantage using a clamp comprising a plurality of elongated regions. Each elongated region may correspond to one airfoil section. However, one airfoil section may be fixed by the use of a plurality of elongated regions.

To facilitate fixing of the clamp to the outer surface of the spar and the airfoil section, the method may comprise a step of distributing the elongated regions in positions corresponding to clamping positions on the spar and the airfoil section, respectively. The clamping positions may be marked on the outer surface, e.g. by visual indication marks, e.g. color indications on the surface or indentations, protrusions, or other marks or combinations of different marks. To facilitate manufacturing of a wind turbine blade comprising a plurality of airfoil sections, the method may comprise a step of arranging further airfoil sections prior to the step of curing the adhesive. Consequently, all joint comprising an adhesive may be cured in one process or in a few processes allowing for an optimised curing process.

To facilitate assembling of more than one airfoil section and the spar, the method may comprise a step of fixing a clamp to outer surfaces of two adjacent airfoil sections allowing for simultaneous handling of two airfoil sections. In one embodiment, the clamp can be fixed to outer surfaces of even more airfoil sections.

The method may further comprise a step of fixing the outer surface of the spar to the outer surface of an airfoil section by an additional clamp. The clamp and the additional clamp may be fixed to surfaces on opposite sides of the spar. As an example, one of the clamp and the additional clamp may be fixed to the downwardly facing surface a spar placed on the support structure whereas the other one may be fixed to the upwardly facing surface hereof.

To facilitate aligning of the spar and the airfoil section, at least one of the spar and the airfoil section may comprise blade alignment markings. Furthermore, the blade alignment markings may be combined with support alignment markings facilitating alignment with at least one of support structure and the clamp. Consequently, it may be an advantage if at least one of the support structure and the clamp comprises support alignment markings corresponding to the blade alignment markings.

In one embodiment, the blade alignment markings comprise indentations and the support alignment markings comprise protrusions. These protrusions are arranged for engagement with the indentations. In an alternative embodiment, the blade alignment markings comprise protrusions, whereas the support alignment markings comprise indentations. Other corresponding markings facilitating alignment may be use in other embodiments.

The support structure may comprise a worktable or a plurality of supporting posts. Furthermore, the support structure may comprise an upper part with a seat for carrying the spar and a hinge structure facilitating tilting of the upper part relative to a lower part of the support structure to enable reorientation of a spar being supported by the support structure.

When having placed the spar on the support structure, the part of the spar forming part of the lee side of the blade may as an example face upwards and the part forming part of the wind side may face downwards. Consequently, the side of the spar facing the trailing edge of the blade may face to the right and the side of the spar facing the leading edge may face to the left, or opposite.

When being able to tilt the upper part of the support structure carrying the spar and thus reorientate the spar, it is possible to turn the part of the spar facing the leading edge upwards and subsequently to lower an airfoil section forming the leading edge or forming part of the leading edge down towards the spar e.g. by a crane, to arrange this airfoil section relative to the spar, to fix the clamp to the outer surface of the spar and the airfoil section and to assemble the airfoil section and the spar.

Finally, the spar may be turned back to its initial position for mounting of the one or more airfoil sections to the other side of the spar.

If the support structure comprises a plurality of supporting posts, these posts may comprise an upper part with a seat for carrying the spar and a hinge structure facilitating tilting of the upper part relative to a lower part of the support structure to enable reorientation of a spar being supported by the support structure. The supporting posts may be adapted to hold the spar so that it is rotated uniformly around its centre line, thereby ensuring a uniform relative, rotational position of the spar along the length of the spar. As an example, this may be facilitated by using an external reference, e.g. provided by a laser.

In an alternative embodiment, in which the upper part of the support structure cannot be reorientated, the airfoil sections forming the leading edge and the trailing edge may be mounted simultaneously.

The upper support structure may comprise a support clamp surface facilitating fixing to the outer surface of the spar. The support clamp may comprise means for fixing of the support clamp e.g. by magnetic forces, by suction pressure, or by bonding.

If the support structure comprises a plurality of supporting posts, it may be an advantage to align these posts before placing the spar on the support structure. The tool may comprise an alignment tool facilitating alignment of the supporting posts. The alignment tool may in one embodiment comprise a laser.

As the airfoil sections may be large, it may be difficult to handle them and to arrange them correctly relative to the spar. Therefore, the tool may further comprise at least one supporting arm being connected to the support structure and adapted to support at least one airfoil section.

### Brief description of the drawings

Embodiments of the invention will now be further described with reference to the drawings, in which:
Fig. 1 illustrates a cross-section of a modular wind turbine blade manufactured by the first aspect of the invention;
Fig. 2 illustrates an embodiment of an un-assembled modular wind turbine blade;
Fig. 3a illustrates an embodiment of a spar having a tubular structure and being assembled form at least two caps and two webs,
Fig. 3b is an enlarged view of Fig. 3a illustrating a joint between a cap and a web,
Fig. 4 illustrates an embodiment of a tool for use in assembling a spar and at least one airfoil section;
Fig. 5 illustrates different embodiments of assembly joints for a modular wind turbine blade;
and
Fig. 6 illustrates alternative assembly joints.

### Detailed description of the drawings

It should be understood that the detailed description and specific examples, while indicating embodiments of the invention, are given by way of illustration only, since various changes and modifications within the spirit and scope of the invention will become apparent to those skilled in the art from this detailed description.

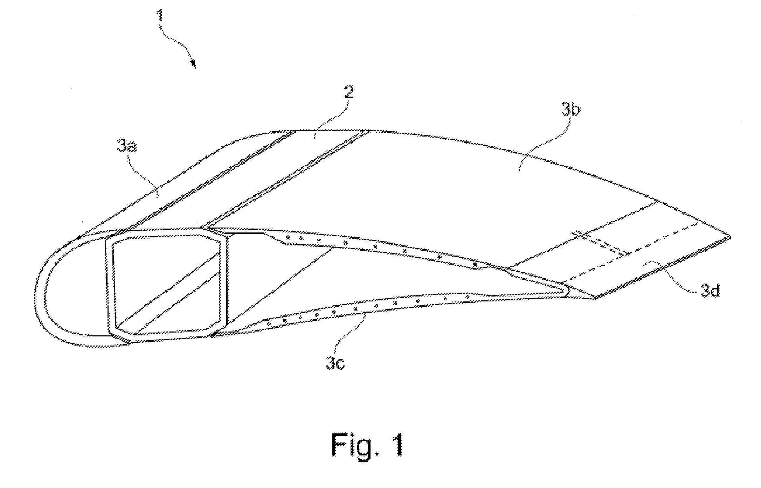

Fig. 1 illustrates a cross-section of a part of a modular wind turbine blade 1. The blade 1 comprises a spar 2 and four airfoil sections 3a, 3b, 3c, 3d. Both the spar 2 and the airfoil sections 3 comprise an outer surface which forms part of the aerodynamically active surface of the blade 1.

Even though only a part of the spar 2 is illustrated, it should be understood, that the spar 2 extends through out substantially the length of the blade 1 and may thus be in one piece before assembling the spar 2 and the at least one airfoil section 3. The spar 2 may however have been assembled of at least two spar sections.

In the illustrated embodiment, one airfoil section 3a forms part of the leading edge of the blade 1, whereas the other airfoil sections 3b, 3c, 3d form part of the trailing edge of the blade 1.

In the illustrated embodiment of part of a blade 1, the airfoil sections 3a, 3b, 3c, 3d have equal length. It should however be understood, that the length of the airfoil sections 3 may not necessarily be equal.

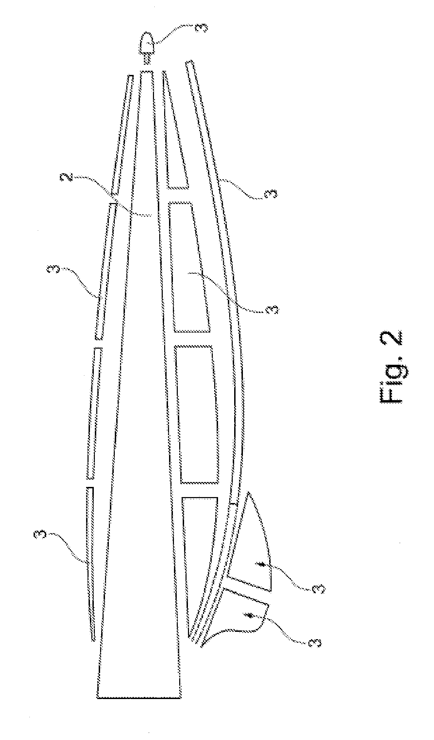

Fig. 2 illustrates an embodiment of an un-assembled wind turbine blade 1 comprising a spar 2 and a plurality of airfoil sections 3.

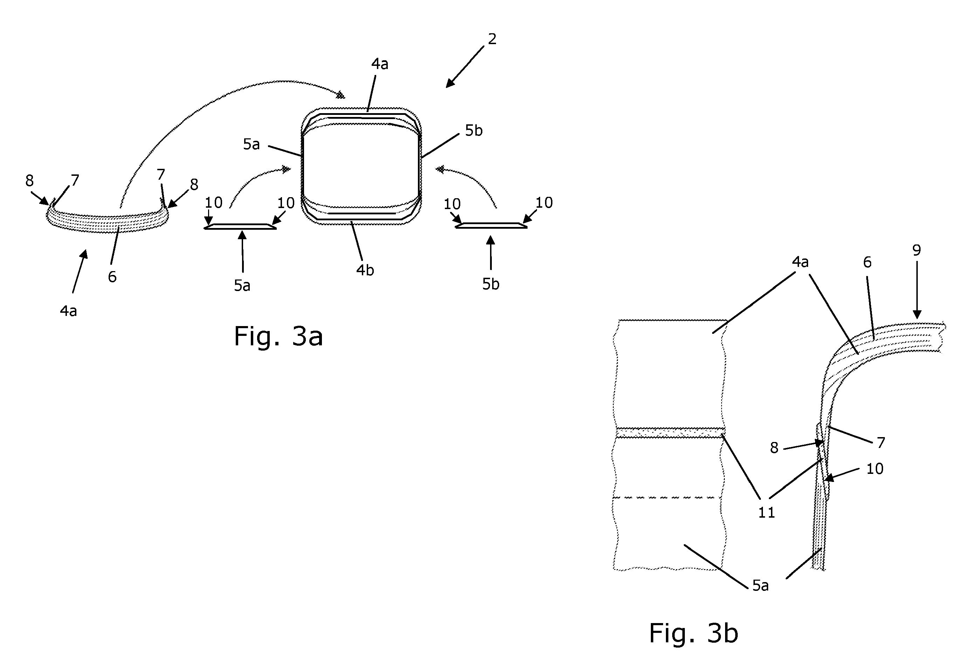

Fig. 3a illustrates an embodiment of a spar 2 for a wind turbine blade (not shown). The spar 2 comprises two caps 4a, 4b and two webs 5a, 5b.

Each cap 4a, 4b forms an intermediate portion 6 between two end portions 7. The end portions 7 each forms a cap joint surface portion 8 and the intermediate portion 6 forms an outer surface portion 9.

Each web 5a, 5b is provided with web joint surface portions 10 along opposite and longitudinally extending edges.

When connecting the joint surface portions of the caps 8 with the joint surface portions of the webs 10, a spar 2 having a tubular configuration is formed. An adhesive 11 is used to bond the joint surface portions 8, 10 together as illustrated in Fig. 3b which shows an enlarged part of Fig. 3a.

As illustrated, the end portions 7 of the caps 4a, 4b extend transversely to the intermediate portion 6 at an angle of approximately 90 degrees, whereby the end portions 7 of the one cap 4a extend from the intermediate portion 6 towards the end portions 7 of the other cap 4b when the spar 2 is assembled. The webs 5a, 5b are attached to the caps 4a, 4b at the end portions 7.

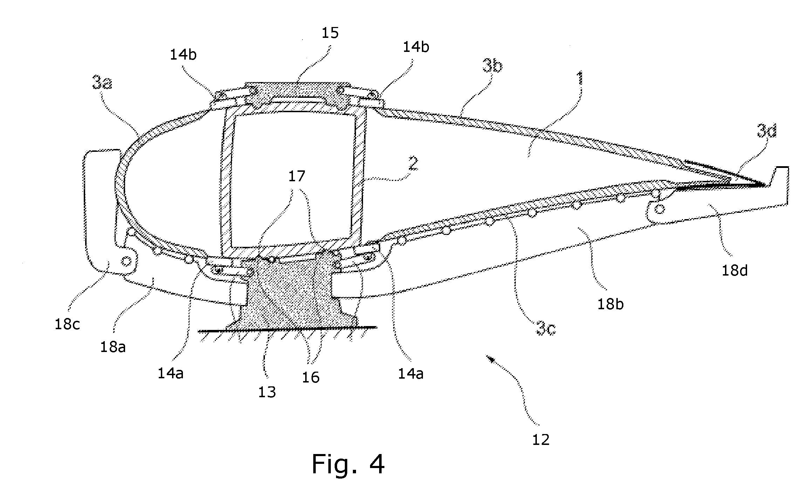

Fig. 4 illustrates an embodiment of a tool 12 for use in assembling a spar 2 and at least one airfoil section 3. The tool 12 comprises a support structure 13 and a number of clamps 14. The clamps 14 are adapted to be fixed to the outer surface of both the spar 2 and the airfoil section 3. The lower clamps 14a adapted to be fixed to the downwardly facing outer surface of the spar 2 and the airfoil section 3 are hinged to the support structure 5, whereas the upper clamps 14b adapted to be fixed to the upwardly facing outer surface of the spar 2 and the airfoil section 3 are hinged to a main body 15.

The support structure 13 comprises support alignment markings 16 formed as protrusions. Corresponding hereto, the spar 2 comprises blade alignment markings 17 formed as small indentations in the outer surface of the spar 2. The alignment marking 16, 17 facilitate positioning of the spar 2 at the support structure 13.

The tool 12 comprises two supporting arms 18a, 18b being connected to the support structure 13. The supporting arms 18a, 18b are adapted to support at least one airfoil section 3.

In the illustrated embodiment, the supporting arm 18a comprises a secondary supporting arm 18c which is hinged to the supporting arm 18a. When placing the airfoil section 3a, the secondary supporting arm 18c can be in an un-activated position, in which it is turned downwards (this configuration is not shown). Subsequently, the secondary supporting arm 18c can be turned to a position in which it presses the airfoil section 3a towards the spar (as illustrated).

Likewise, the supporting arm 18b comprises a secondary supporting arm 18d which is hinged to the supporting arm 18b.

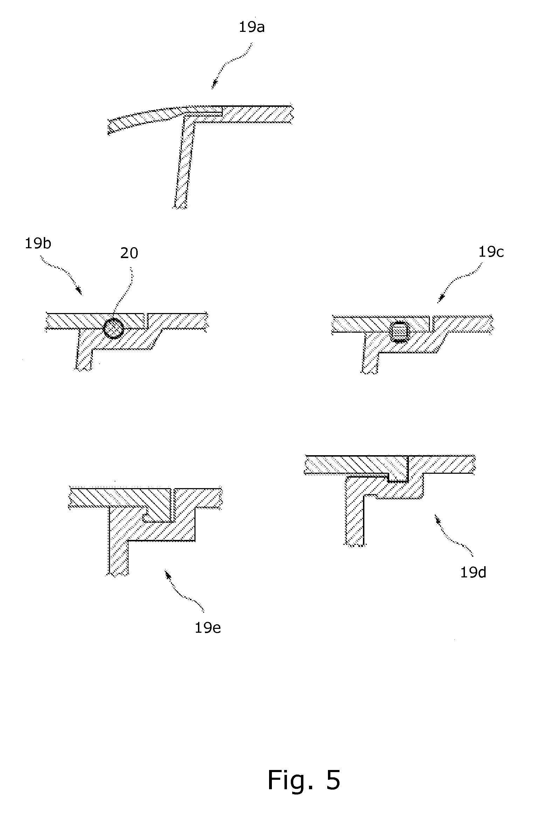

Fig. 5 illustrates different embodiments of assembly joints 19 for a modular wind turbine blade. The assembly joints 19 are especially well suited for assembling of longitudinal joint, i.e. joints between the spar 2 and an airfoil section 3 and between adjacent airfoil sections 3 which joints are substantially parallel to the length of the spar 2. Each of the joints 19 comprises at least an adhesive which is not shown in Fig. 5.

The joint 19a comprises only a cured adhesive.

The joint 19c comprises a cavity in which a cylinder 20 is bonded to facilitate a larger bond surface of this joint.

The joints 19d, 19e, 19f illustrated three different embodiments of snap lock joints.

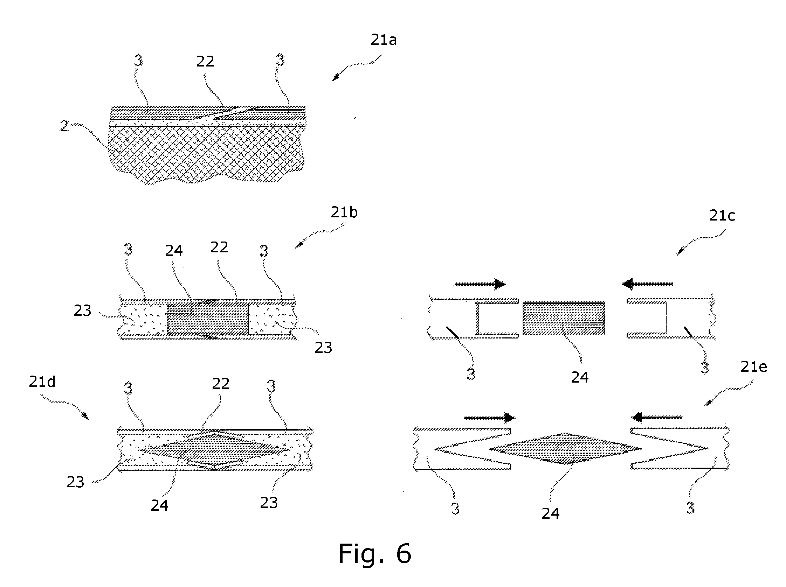

Fig. 6 illustrates different alternative embodiments of assembly joints 21 for a modular wind turbine blade. The assembly joints 21 are especially well suited for assembling of transversal joint, i.e. joints between adjacent airfoil sections 3 which joints are substantially perpendicular to the length of the spar 2.

The joint 21a is a joint between the two adjacent airfoil sections 3. The airfoil sections 3 have tapered end portions to ensure overlay of material when bonding the airfoil sections 3 together by an adhesive 22.

The joints 21b, 21c, 21c, 21d are all sandwich panel joints in which two end portions of two adjacent airfoil sections 3 are joined by butt joints.

The joint 21b comprises a light core 23 between two opposite sides of an airfoil section 3. When joining two such airfoil sections 3, the light core 23 is substituted by a load carrying dense core 24 at the joint. Furthermore, the joint 21b comprises an adhesive 22.

The joint 21c is similar to the joint 21b except for the fact, that this joint does not comprise a light core. Instead the airfoil section material is through-going.

The joint 21d is equal to the joint 21b except for the geometry. The joint 21e is likewise equal to the joint 21c except for the geometry.

## Claims

1. A wind turbine blade comprising at least one spar section and at least two airfoil sections, wherein
- each spar section comprises two caps and two webs which have been pre-manufactured and positioned to form a tubular element;
- each airfoil section forming, respectively, a leading edge section and a trailing edge section of a corresponding blade section, the blade section being placed adjacently to one of the at least one spar sections;
- each airfoil section comprising a shell positioned both in a pressure side and in a suction side of the blade; and wherein
an aerodynamic profile of the blade being defined by said caps and the at least two airfoil sections.

2. A blade according to claim1, wherein the shell comprises two shell parts, a first shell part being positioned in the pressure side and a second shell part being in the suction side of the blade.

3. A blade according to claim 1 or 2, wherein the webs have a larger thickness than the caps to increase a stiffness of the spar, the thickness being the smallest dimension of the caps and webs.

4. A blade according to any of the preceding claims, wherein each of the webs comprises a plurality of web elements.

5. A method of manufacturing a wind turbine blade comprising a spar and at least one airfoil section, where both the spar and the airfoil section comprise an outer surface which forms part of an aerodynamically active surface of the blade, the method comprises the steps of:
- providing a support structure;
- placing the spar at the support structure;
- providing a clamp adapted to be fixed to the outer surface of both the spar and the airfoil section;
- arranging the airfoil section relative to the spar;
- fixing the clamp to the outer surface of the spar and the airfoil section; and
- assembling the at least one airfoil section and the spar by a process including adhesion.

6. A method according to claim 5, further comprising a step of aligning the spar relative to the support structure.

7. A method according to claim 5 or 6, wherein the step of fixing the clamp to the outer surface of the spar and the airfoil section comprises a step of providing a pressure gradient between an elongated region in the clamp and an ambient pressure outside the elongated region to provide a clamping force.

8. A method according to claim 7, wherein the pressure gradient is provided in a region extending along a major part of the length of the airfoil section.

9. A method according to any of claims 5-8, wherein the clamp comprises a plurality of elongated regions, the method comprising a step of distributing the regions in positions corresponding to clamping positions on the spar and the airfoil section, respectively.

10. A method according to any of claims 5-9, further comprising a step of applying an adhesive to at least one of the spar and the airfoil section and a step of curing said adhesive.

11. A method according to claim 10, further comprising a step of arranging further airfoil sections prior to the step of curing said adhesive.

12. A method according to any of claims 5-11, further comprising a step of fixing a clamp to outer surfaces of two adjacent airfoil sections.

13. A method according to any of claims 5-12, further comprising a step of fixing the outer surface of the spar to the outer surface of an airfoil section by an additional clamp.

14. A method according to claim 13, wherein the clamp and the additional clamp are fixed to surfaces on opposite sides of the spar.
